Europäisches Patentamt

European Patent Office

Office européen des brevets

(11) Publication number: **0 155 782**
**B1**

# EUROPEAN PATENT SPECIFICATION

(45) Date of publication of patent specification: **01.06.88**

(51) Int. Cl.⁴: **A 23 L 1/216, A 23 C 19/09**

(21) Application number: **85301330.8**

(22) Date of filing: **27.02.85**

(54) Cheese foods containing mashed potato and manufacturing process therefor.

(30) Priority: **03.03.84 JP 39759/84**
**31.03.84 JP 64236/84**

(43) Date of publication of application:
**25.09.85 Bulletin 85/39**

(45) Publication of the grant of the patent:
**01.06.88 Bulletin 88/22**

(84) Designated Contracting States:
**DE FR**

(56) References cited:
**EP-A-0 071 114**
**FR-A-2 537 403**

(73) Proprietor: **MK CHEESE COMPANY LIMITED**
**1206 Fukaya**
**Ayase City Kanagawa Prefecture (JP)**

(72) Inventor: **Shinozaki, Takashi**
**23-24 Nakahara 1-chome**
**Mitaka City Tokyo (JP)**
Inventor: **Imagawa, Asashi**
**393-1 Mouchi**
**Ebina City Kanagawa Prefecture (JP)**

(74) Representative: **Quest, Barry et al**
**M'CAW & Co. 41-51 Royal Exchange Cross Street**
**Manchester M2 7BD (GB)**

Courier Press, Leamington Spa, England.

## Description

Technical field of the invention

The invention relates to novel cheese foods containing mashed potato, water and an acidulant which may be mixed further with coloring and flavoring agents, other seasonings, vegetables and other various food stuff materials, and a process for manufacturing thereof.

Background of the invention and prior arts

Cheeses are so rich in fat and protein that these are nutritionally highly evaluated on the one hand but excessive ingestion thereof must be refrained by reasons of too high fatty content and calorie thereof for aged and corpulent persons on the other hand. Due to peculiar smell and stickiness to teeth thereof due to viscoelastic construction, some people dislike cheeses despite of desirable nutrition. Furthermore, cheeses are so readily decomposed and dried that it is fairly difficult to store for a long time without losing desired flavor and taste.

Some proposals have been made for improving anti-dehydration, anti-rotteness and storage stability or modifying physical properties by adding some agent. For example, Japanese Patent Application Early Open Gazette 75060/1981 proposes addition of cyclodextrine to cheese so as to improve anti-dehydration, anti-rotteness and storage stability. It is also disclosed in said Gazette that addition thereof may also improve the taste thereof and that such processed cheese may be added to ice-cream, sherbet, pudding, jelly, bavarois and so on to create new cakes or foods of peculiar flavor and taste. Japanese Patent Application Early Open Gazette 13348/1983 discloses that pulverized raw rice is added to cheese to be kneaded for modifying physical properties so that heated and melted cheese may hold formed shape and processibility thereof is improved. Said prior arts both disclose addition a carbohydrate, which resultingly increases carbohydrate content and decreases fat content relatively more or less in the cheese foods, but neither thereof can change high fat content or high calorie and viscoelastic construction of cheese.

Summary of the invention

Thus an object of the invention is to provide a novel cheese foods capable of giving crisp feeling when biting and of which nutritive elements are well balanced and of which calorie is lowered.

Said object and concerned advantages are attained by adding mashed potato, water and an acidulant to cheese, knead at a raised temperature and then cooling the mixture to be solidified.

Description of the embodiment

The mixture of cheese, mashed potato, water and the acidulant is well kneaded at a raised temperature which ranges from about 80°C to about 95°C. Said kneading may be done with any device so far as it can well knead said mixture, but it is preferable to use a cheese melting pot usually used for preparing the processed cheese. The kneaded product is then cooled to solidify. When forwarding in the market as finished goods, it is preferable to pack the kneaded product of suitable shape and size firstly with an undercoating wrapper such as Parakote (The Menasha Products Company) and further with carton, aluminum foil of polymer film and held at a temperature of about 10°C.

As material cheese in the invention, any of various natural cheeses, processed cheeses, filled cheeses which are prepared by substituting fatty content with any other edible fat, and synthetic cheeses prepared from edible fat, casein, soybean protein and the like may be used. As occasion demands, for instance when natural cheese is used, usual molten salt such as citrate, orthophosphate, methaphosphate and polyphosphate or any mixture thereof may be used. When using processed cheese, there is no need in general for using molten salt. Cheese is used in the amount of about 10—40 weight % in relation to the cheese foods. When the content of material cheese is less than said lower limit, the finished products lack firmness so that sufficiently solid cheese foods can not be obtained. When it is more than said upper limit, the finished product is still of viscoelasticity.

As mashed potato to be used in the invention, dried product in the form of flakes or granules having 5—8% water content may be used, which is available in the market and can be prepared by subjecting raw potatoes to washing, paring, cutting, boiling, cooling, colandering, drying and crushing. Of course freshly mashed potato may be used. Mashed potato is used in the amount of about 5—20 weight % in the invention relative to the finished product. When the amount of used mashed potato is less than said lower limit the finished product still has viscoelasticity. When it is more than said upper limit, mashed potato is hardly merged into material cheese and dextrine in not well merged mashed potato is deteriorated during the storage so that the finished product is apt to be made brittle.

As an acidulant, any of edible souring agents such as citric acid, acetic acid, lactic acid and vinegar or any mixture thereof may be used. The acidulant is preferably used in such an amount as to control the pH value of the finished product lower than 5.5. When pH of the cheese foods is higher than 5.5, anti-heat spore forming bacteria originating from the used material are multiplied during the storage of the finished product and taste thereof is spoiled. Influence of the acidulant on the pH value is of course varied depends on the number of carboxylic group and chemical properties thereof. Accordingly the sort and amount of the acidulant to be used should be decided so that the pH value of the cheese foods of the invention is lower than 5.5 with taking into consideration of harmonization with the taste thereof.

In addition to said 10—40 weight % cheese, 5—20 weight % mashed potato and the acidulant in such amount as to control the pH value of the finished product to be lower than 5.5, it is possible to add thereto coloring and flavoring agents, a seasoning such as salt and spices, an anti-dehydration agent such as Guar gum, Locust bean gum and Carrageenan, as well as other suitable foodstuff materials such as tuna, tomato, green peas.

The amount of water to be added may be varied depending on the sort and total amount of materials to be anxiliarily added as referred to above and generally lie in the range of from 40 weight % in relation to the finished product, which is fairly more than 10 weight % water added for preparing usual processed cheese.

### Example 1

Into a marketed cheese melting pot provided with steam jackets, a steam nozzle, stirring blades, a thermometer and a device for decompression, charged were 8.8 kg. Gouda cheese of Holland (aged for four months), 0.32 kg a marketed molten salt comprising sodium citrate and sodium secondary phosphate, 4.8 kg mashed potato ("Mashpotato Flake" Kuredoru Corp.), 0.4 kg salt, 0.12 kg curry powder (San-ei Chemical Co.), 0.6 kg sweet corn, 0.13 kg acetic acid and 24.83 kg water totally to be of 40 kg. The mixture was well kneaded with stirring at a raised temperature. In this case ratios of cheese, mashed potato and water in relation to the finished product are 22%, 12% and 62% respectively by weight.

When the temperature of the blended product reached at about 85°C, heating was stopped. Each finished product divided in 36 pieces was covered with Parakote and further with a carton of 1 kg capacity (7 cm × 7 cm × 21 cm), which were left for cooling at a temperature of 25°C and then cooled at 7°C in the refrigerator so as to obtain cheese foods of the invention totally amounting to 36 kg. The pH value thereof is 4.8.

### Example 2

Into the cheese melting pot of Example 1, charged were 12 kg Gouda cheese of Holland (aged for four months), 0.44 kg a marketed molten salt comprising sodium citrate and sodium secondary phosphate, 3.2 kg mashed potato ("Mashedpotato-Flake" Kuredoru Co.), 0.4 kg salt, 0.6 kg green peas, 1.9 kg cider vinegar and 23.16 kg water to be totally of 41.7 kg, which were blended with stirring at a raised temperature. The ratios of cheese, mashed potato and water in relation to the finished product are 28.8%, 7.7% and 55.5% respectively by weight.

When the temperature of the blended product reached at about 85°C, heating was stopped. Each finished product divided in 36 pieces was covered with Parakote and further with a carton of 1 kg capacity (7 cm × 7 cm × 21 cm), which were left for cooling at a temperature of 25°C and cooled at 7°C in the refrigerator. After having been solidified, each piece was sliced into sheets each of 3 mm thickness an 4 g weight. Thus totally 2500 sheets of cheese foods of pH 5.0 were obtained.

Advantages attained according to the invention are:

(1) It is possible to provide new cheese foods having carbohydrate content nutritially well balanced in relation to originally rich fat and protein contents in cheese and low calorie due to relatively higher content of water.

(2) It is possible to provide new cheese foods capable of holding formed shape despite of such higher water content.

(3) It is possible to provide new cheese foods having crips bite feeling instead of peculiar viscoelastic feeling of cheese or usual cheese product.

### Claims

1. Cheese foods containing mashed potato, characterized by comprising 10 to 40% by weight of material cheese, 5 to 20% by weight of mashed potato, from 40% by weight of water, and an acidulant.

2. Cheese foods claimed in claim 1, characterized by having a pH value not higher than 5.5.

3. Process for manufacturing cheese foods containing mashed potato, characterized by adding 5% to 20% by weight mashed potato, from 40% by weight water and an acidulant to 10 to 40% by weight cheese, kneading said mixture at a raised temperature of about 80 to 95°C and cooling the mixture to be solidified.

4. Process claimed in claim 3, characterized by adjusting pH of said cheese foods so as not to exceed 5.5 with said acidulant.

### Patentansprüche

1. Käsehaltiges Nahrungsmittel mit Kartoffelbrei, dadurch gekennzeichnet, daß das käsehaltige Nahrungsmittel zu 10 bis 40 Gewichtsprozent aus Käse, zu 5 bis 20 Gewichtsprozent aus Kartoffelbrei, zu 40 Gewichtsprozent aus Wasser sowie aus einem Säuerungsmittel besteht.

2. Käsehaltiges Nahrungsmittel nach Anspruch 1, dadurch gekennzeichnet, daß der pH-Wert nicht höher als 5,5 ist.

3. Verfahren zur Hestellung eines käsehaltigen Nahrungsmittels mit Kartoffelbrei, dadurch gekennzeichnet, daß zu 10 bis 40 Gewichtsprozenten Käse 5 bis 20 Gewichtsprozent Kartoffelbrei, 40 Gewichtsprozent Wasser und ein Säuerungsmittel hinzugefügt werden, diese Mischung bei einer auf 80 bis 95°C erhöhten Temperatur geknetet und anschließend zur Verfestigung abgekühlt wird.

4. Verfahren nach Anspruch 3, dadurch gekennzeichnet, daß der pH-Wert des käsehaltigen Nahrungsmittels derart eingestellt wird, daß er nach Zusatz des Säuerungsmittels den Wert 5.5 nicht übersteigt.

### Revendications

1. Aliments à base de fromage contenant de la purée de pomme de terre, caractérisés en ce qu'ils comprennent 10 à 40% en poids de matière fromagère, 5 à 20% en poids de purée de pomme de terre, au moins 40% en poids d'eau et un agent d'acidification.

2. Aliments à base de fromage selon la revendication 1, caractérisés en ce qu'ils ont un pH non supérieur à 5,5.

3. Procédé de fabrication d'aliments à base de fromage contenant de la purée de pomme de terre, caractérisé en ce que l'on ajoute de 5 à 20% en poids de purée de pomme de terre, au moins 40% en poids d'eau et un agent d'acidification, à de 10 à 40% en poids de fromage, on pétrit ledit mélange à une température élevée d'environ 80 à 95°C et on refroidit le mélange devant se solidifier.

4. Procédé selon la revendication 3, caractérisé en ce que l'on ajuste le pH desdits aliments à base de fromage de sorte qu'il ne dépasse pas 5,5 avec ledit agent d'acidification.